(19) Europäisches Patentamt
European Patent Office
Office européen des brevets

(11) **EP 4 726 531 A1**

(12) **EUROPEAN PATENT APPLICATION**

(43) Date of publication:
**15.04.2026   Bulletin 2026/16**

(21) Application number: **24306683.4**

(22) Date of filing: **14.10.2024**

(51) International Patent Classification (IPC):
***G06F 7/72*** *(2006.01)*

(52) Cooperative Patent Classification (CPC):
**G06F 7/72;** H04L 2209/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Commissariat à l'Energie Atomique et aux
Energies
Alternatives
75015 Paris (FR)**
• **INRIA - Institut National de Recherche en
Informatique et en Automatique
78150 Le Chesnay (FR)**

(72) Inventors:
• **RAS, Antonio
38054 GRENOBLE CEDEX 9 (FR)**
• **LOISEAU, ANTOINE
38054 GRENOBLE CEDEX 9 (FR)**
• **RENAULT, Guenael
35000 RENNES (FR)**
• **VALEA, Emanuele
38054 GRENOBLE CEDEX 9 (FR)**
• **SMITH, Benjamin
91120 PALAISEAU (FR)**

(74) Representative: **Lavoix
2, place d'Estienne d'Orves
75441 Paris Cedex 09 (FR)**

(54) **CALCULATION ACCELERATOR ADAPTED TO CARRY OUT CALCULATIONS ACCORDING
TO SEVERAL CRYPTOSYSTEMS**

(57)    The invention relates to a calculation accelerator (10) adapted to carry out calculations according to a first cryptosystem and a second cryptosystem, the first cryptosystem being a lattice-based cryptosystem and the second cryptosystem being a code-based cryptosystem, the calculation accelerator (10) comprising several calculation modules, each calculation module applying an operation on input signals to obtain an output signal, namely:
- a first calculation module (M1) configurable to implement modular addition or carryless addition,
- a second calculation module (M2) configurable to implement identity with relation to one of the input signals, modular subtraction, modular addition and carryless addition,
- a third calculation module (M3) configurable to implement integer multiplication and carryless multiplication, and
- a fourth calculation module (M4) configurable to implement identity with relation to one of the input signals; modular subtraction, modular addition and carryless addition.

FIG.1

EP 4 726 531 A1

**Description**

The present invention concerns a calculation accelerator adapted to carry out calculations according to several cryptosystems.

This invention relates to the field of post-quantum cryptography, which is a new cryptography resilient to classical and quantum cryptanalysis.

Several post-quantum cryptosystems are known, such as Crystals-Kyber or HQC.

Crystals-KYBER belongs to the lattice-based cryptography family.

Its security relies on the hardness of solving the Module-Learning-With-Errors (or M-LWE) problem over lattices.

This problem is based on the multiplication between a public matrix A and a secret vector s, with the addition of a small error e in the operation. It states that given A and t=As+e, it is unfeasibly difficult to find s.

More formally, the M-LWE problem can be formulated for a polynomial ring $R_q = \frac{\mathbb{Z}_q}{\chi^n + 1}$ as follows: given a public matrix $A \in R_q^{k1 x k2}$ and a secret $s \in R_q^k$ obtained uniformly and a small error $e \in R_q^k$ whose coefficients are obtained from a binomial distribution $\chi^k$ and knowing that $t = As + e$ and $A$, it is difficult to find s.

CRYSTALS-Kyber works with data represented as polynomials with coefficients in a finite field of order q=3329.

Crystals-KYBER uses the Number Theoretic Transform (NTT), an equivalent operation of the Fast Fourier Transform (FFT) perfectly adapted when polynomials are represented using finite field number with a prime integer modulo. The computation of the polynomial multiplication consists of three main functions :

- Forward_NTT transforms an input polynomial in the NTT domain ;
- point-wise multiplication takes the two polynomial inputs in the NTT domain and it perform the multiplication between pairs of coefficients, and
- Inverse NTT brings back the results in the starting polynomial basis.

Each NTT operations rely on hardware architectures called butterfly structures. They work using data on 13-bits each and the operation involved in their functionality are addition, subtraction and multiplication. All of them are executed modulo q, meaning that the result always has to belong in the value range [0, q-1].

HQC, which stands for Hamming Quasi-Cyclic, belongs to code-based cryptography. Such family is based on the theory of error-correcting codes, where the addition of redundant data can correct errors in messages transmitted over a noisy communication channel.

The security of HQC relies on the difficulty of the Quasi-Cyclic Syndrome Decoding problem, which can be expression formally as follows: given a random I-quasi-cyclic code $C(n, k, d)_q$ with parity-check matrix $H$, and a uniform small error $e \in \mathbb{F}_q^n$ with Hamming weight lower than $\omega$ and knowing that $s = eH^t$ and $H$, it is a difficult problem to find the small error $e$. In the previous expression, $d$ is the minimal distance of the code, $s$ is a syndrome vector and $H$ is the matrix used to characterize the error.

HQC works with data represented as long binary polynomials. Some of them are defined with a specific Hamming weight (HW) values, which represents the number of coefficients equals to 1.

The common hardware implementation of the polynomial multiplication of this cryptosystem is performed using a carryless schoolbook-based approach, meaning that, during the addition of the temporary values of the operation, the carry is not propagated.

In this cryptosystem, polynomials are in polynomial ring $\mathcal{R}_{2^n} = \frac{GF(2)}{X^n + 1}$, so their coefficients can be either 0 or 1. Furthermore, this operation always implies a normal polynomial and another one called sparse, which contains a specific number of coefficients equals to 1.

However, during Round 4 of NIST process, HQC's authors proposed a new approach to perform the polynomial multiplication, the 2-way Karatsuba. It uses a classical dense-dense multiplication to avoid some possible leakage of information due to the sparsity representation of one of the polynomial involved in the operation. Furthermore, this modification, may alter the state of the art of the polynomial multiplication since, up to now, there are no 2-way Karatsuba hardware solution applied on HQC.

There are other methods adapted to perform a carryless polynomial multiplication. A relevant technique is the Additive Fast Fourier Transform (AFFT), which is an FFT-based operation adapted to be used in the context of binary (carryless) polynomial multiplication. The mathematical approach behind the AFFT is much more complex with respect to normal FFT or NTT, especially the computation of the new polynomial basis to be used during the basis conversion of the inputs polynomials.

Thus, these two cryptosystems are based on two mathematical problems not belonging to the same cryptographic family. This results in cryptosystems relying on the different formalisms, different arithmetic and different data formats (size and representation).

It is nevertheless desirable to develop an hardware implementation able to execute the operations contained inside different post-quantum cryptosystems.

One first major issue is the acceleration of the performance of such hardware implementation: many applications required fast execution time of cryptographic primitives imposing accelerations at the hardware level for authentication, signing, connection establishment, etc.

A second major issue is to consider the ability for the hardware implementation to switch from a cryptosystem to another one. Agility allows increasing the lifetime of the system in case of vulnerabilities founded on the new cryptosystems.

There is therefore a need for a calculation accelerator adapted to carry out calculations according to a first cryptosystem and a second cryptosystem, the first cryptosystem being a lattice-based cryptosystem and the second cryptosystem being a code-based cryptosystem, the calculation accelerator providing with a relatively good calculation performance with a restricted area surface.

To this end, the specification describes a calculation accelerator adapted to carry out calculations according to a first cryptosystem and a second cryptosystem, the first cryptosystem being a lattice-based cryptosystem and the second cryptosystem being a code-based cryptosystem,
the calculation accelerator comprising a plurality of calculation modules, each calculation module applying an operation on input signals to obtain an output signal, the plurality of calculation modules comprising:

- a first calculation module configured to apply a first operation on its input signals, the first calculation module being configurable between a first calculation mode in which the first operation is a modular addition and a second calculation mode in which the first operation is a carryless addition,
- a second calculation module configured to apply a second operation on its input signals, the second calculation module being configurable between a disabled mode wherein the second operation is identity with relation to one of the input signals of the second calculation module, a first calculation mode in which the second operation is a modular subtraction, a second calculation mode in which the second operation is a modular addition and a third calculation mode in which the second operation is a carryless addition,
- a third calculation module configured to apply a third operation on its input signals, the third calculation module being configurable between a first calculation mode in which the third operation is an integer multiplication, a second calculation mode in which the third operation is a carryless multiplication, and
- a fourth calculation module configured to apply a fourth operation on its input signals, the fourth calculation module being configurable between a disabled mode wherein the fourth operation is identity with relation to one of the input signals of the fourth calculation module, a first calculation mode in which the fourth operation is a modular subtraction, a second calculation mode in which the fourth operation is a modular addition and a third calculation mode in which the fourth operation is a carryless addition.

According to further aspects, which are advantageous but not compulsory, the calculation accelerator might incorporate one or several of the following features, taken in any technically admissible combination:

- the first cryptosystem is Crystals-KYBER and the second cryptosystem is HQC.
- the plurality of calculation module consists of the first calculation module, the second calculation module, the third calculation module and the fourth calculation module.
- each calculation module is an hardware circuitry.
- the calculation accelerator comprises a first input adapted to receive a first input signal, a second input adapted to receive a second input signal, a third input adapted to receive a third input signal, a first output adapted to output a first output signal and a second output adapted to output a second output signal,

  the input signals of the first calculation module being the first input signal of the calculation accelerator, the second input signal of the calculation accelerator and an output of the third calculation module, the first calculation module being configured to output a first result signal, the first result signal being the result of the application of the first operation on two of the input signals of the first calculation module, the first output signal being the first result signal.

  - the first calculation module comprises an input selector arranged to select a signal between the second input signal of the calculation accelerator and the output of the third calculation module, the first operation being applied on the first input signal and the selected signal.
  - the input signals of the second calculation module are the first input signal of the calculation accelerator and the second input signal of the calculation accelerator, the second calculation module being configured to output a second result signal, the second result signal being the result of the application of the second operation on the input signals of the second calculation module.

- the inputs signals of the third calculation module are an output of the second calculation module and the third input signal of the calculation accelerator, the third calculation module being configured to output a third result signal, the third result signal being the result of the application of the third operation on the input signals of the third calculation module.

- the input signals of the fourth calculation module are the first result signal, the second result signal, the third result signal and the first input signal of the calculation accelerator, the fourth calculation module being configured to output a fourth result signal, the fourth result signal being the result of the application of the fourth operation on two of the input signals of the fourth calculation module, the second output signal of the calculation accelerator being the fourth result signal.

- the fourth calculation module comprises an input selector arranged to select a first selected signal among the first result signal and the first input signal of the calculation accelerator and a second selected signal among the second result signal and the third result signal, the fourth operation being applied on the first selected signal and the second selected signal.

- the first calculation module is configurable between the first calculation mode, the second calculation mode and at least one additional calculation mode, the at least one additional calculation mode being chosen among a mode in which the first operation is a carry addition performed on 16 bits and a mode in which the first operation is a carry modular addition with modular division by 2 modulo a predetermined modulus.

- the first calculation module comprises a first calculation line adapted to calculate a carryless addition and a second calculation line adapted to calculate a carry addition, the first calculation line being distinct from the second calculation line.

- the second calculation module is configurable between the disabled mode, the first calculation mode, the second calculation mode and at least one additional calculation mode, the at least one additional calculation mode being chosen among a mode in which the second operation is a carry subtraction performed on 16 bits and a mode in which the second operation is a carry modular subtraction with modular division by 2 modulo a predetermined modulus.

- each of the second calculation module and the fourth calculation module comprises a first calculation line adapted to calculate a carryless subtraction and a second calculation line adapted to calculated a carry substraction, the first calculation line being distinct from the second calculation line.

- the calculation accelerator comprises several configuration inputs, each configuration input being adapted to receive a respective configuration signal, each calculation module being adapted to receive at least one of the configuration signal,

the calculation mode of each calculation module being controlled by the value of the at least one of the configuration signal.

The term "adapted to" used here should be understood as meaning "able to" or "configured to".

The invention will be better understood on the basis of the following description which is given in correspondence with the annexed figures and as an illustrative example, without restricting the object of the invention. In the annexed figures:

- figure 1 is a schematic representation of a calculation accelerator comprising four calculation modules arranged to carry out calculations according to two cryptosystems,
- figure 2 is a schematic representation of a first calculation module belonging to the calculation accelerator of figure 1,
- figure 3 is a detailed electronic scheme of a part of the first calculation module of figure 2,
- figure 4 is a schematic representation of a second calculation module belonging to the calculation accelerator of figure 1,
- figure 5 is a detailed electrical scheme of a part of the second calculation module of figure 4,
- figure 6 is a schematic representation of a third calculation module belonging to the calculation accelerator of figure 1,
- figure 7 is a detailed electrical scheme of a part of the third calculation module of figure 6,
- figure 8 is a schematic representation of a fourth calculation module belonging to the calculation accelerator of figure 1,
- figure 9 is a detailed electrical scheme of a part of the fourth calculation module of figure 8,
- figure 10 is a schematic representation of an operating of the calculation accelerator of figure 1 in a first calculation configuration,
- figure 11 is a schematic representation of an operating of the calculation accelerator of figure 1 in a second calculation configuration,
- figure 12 is a schematic representation of an operating of the calculation accelerator of figure 1 in a third calculation configuration,
- figure 13 is a schematic representation of an operating of the calculation accelerator of figure 1 in a fourth calculation configuration,
- figure 14 is a schematic representation of an operating of the calculation accelerator of figure 1 in a fifth calculation configuration,
- figure 15 is a schematic representation of an operating of the calculation accelerator of figure 1 in a sixth calculation configuration,
- figure 16 is a schematic representation of an operating of the calculation accelerator of figure 1 in a seventh calculation configuration,
- figure 17 is a detailed electrical scheme of a part of the first calculation module of figure 2 according to another example,
- figure 18 is a detailed electrical scheme of a part of the second calculation module of figure 4 according to another example, and
- figure 19 is a schematic representation of an operating of the calculation accelerator of figure 1 in an eighth calculation configuration obtained with the first calculation module of figure 17 and the second calculation module of figure 18.

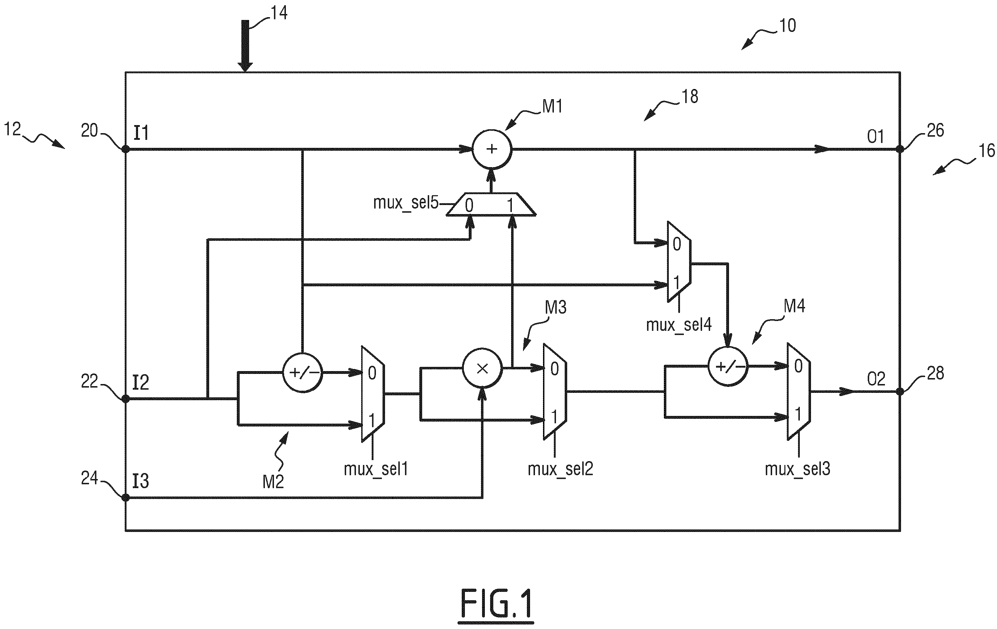

Figure 1 illustrates an example of calculation accelerator 10.

The calculation accelerator 10 is adapted to carry out calculations according to a first cryptosystem and a second cryptosystem.

In the present case, the first cryptosystem is a lattice-based cryptosystem and more specifically Crystals-KYBER.

The second cryptosystem is a code-based cryptosystem and more specifically HQC.

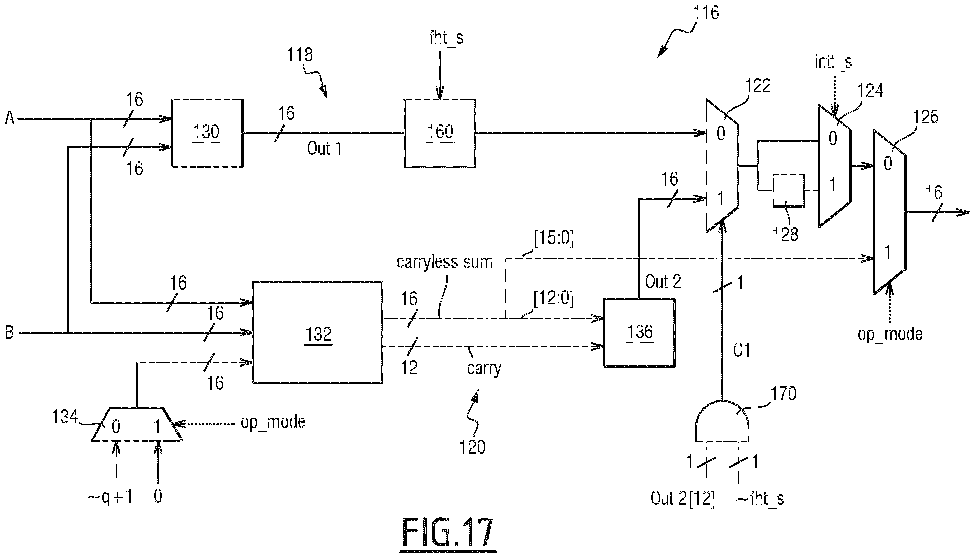

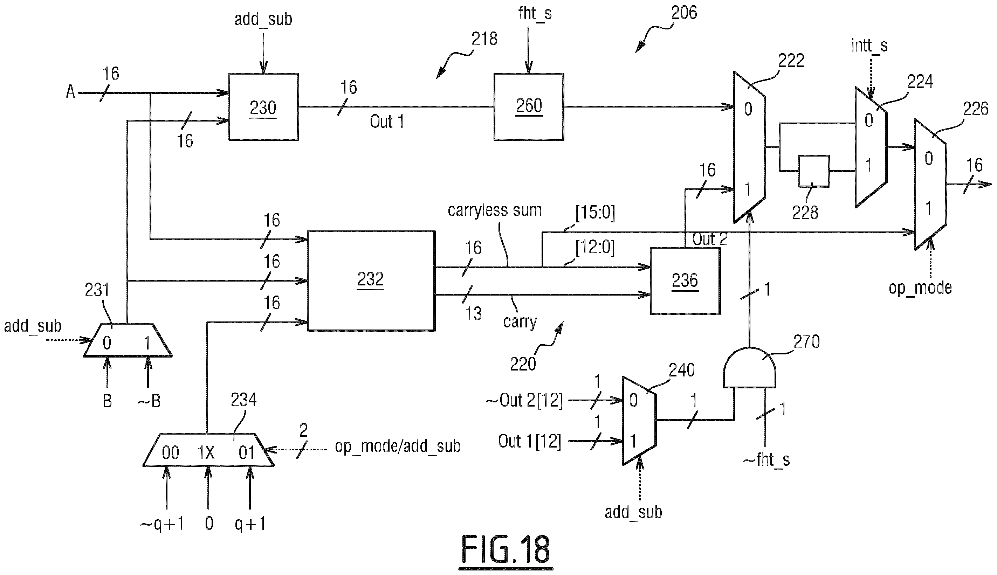

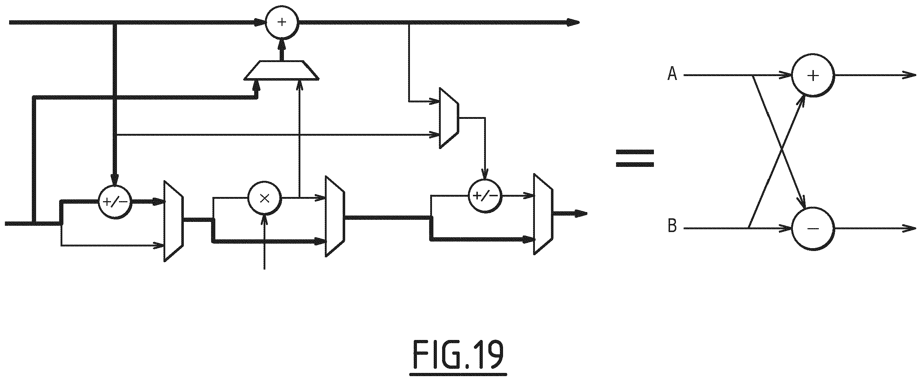

As will be apparent later, and notably in reference to figures 17 to 19, the calculation accelerator 10 may also be adapted to carry out calculations according to other cryptosystems than Crystals-KYBER and HQC.

The calculation accelerator 10 comprises several inputs 12, several configuration inputs 14, several outputs 16 and a plurality 18 of calculation modules.

According to the example of figure 1, the calculation accelerator 10 comprises three inputs 12, a first input 20 adapted to receive a first input signal I1, a second input 22 adapted to receive a second input signal I2 and a third input 24 adapted to receive a third input signal I3.

The calculation accelerator 10 is also provided with nine configuration inputs (represented by a single arrow on figure 1 by commodity), each being adapted to receive a respective configuration signal.

This nine configuration signals are named op-mode, add_sub, pwm_in, intt_s, mux_sel1, mux_sel2, mux_sel3, mux_sel4 and mux_sel 5.

The calculation accelerator 10 further comprises two outputs 16, namely a first output 26 adapted to output a first output signal O1 and a second output 28 adapted to output a second output signal O2.

These two output signals O1 and O2 are the results of operations carried out by the plurality 18 of calculation modules on the first input signal I1, the second input signal I2 and the third input signal I3.

The operations are achieved by the plurality 18 of calculation modules according to a calculation configuration determined by the values of the nine configuration signals.

More specifically, each calculation module is adapted to apply an operation on input signals to obtain an output signal, this operation being configurable between several operations by using the configuration signals.

In that sense, each calculation module can be considered as an agile module.

In the following, each distinct operation carried out by a calculation module will be named a calculation mode.

Each calculation configuration of the calculation accelerator 10 is thus the combination of the calculation modes of each calculation module.

In other words, the nine configuration signals have the role of configuring the calculation mode of each calculation module, thereby determining a calculation configuration of the calculation accelerator 10.

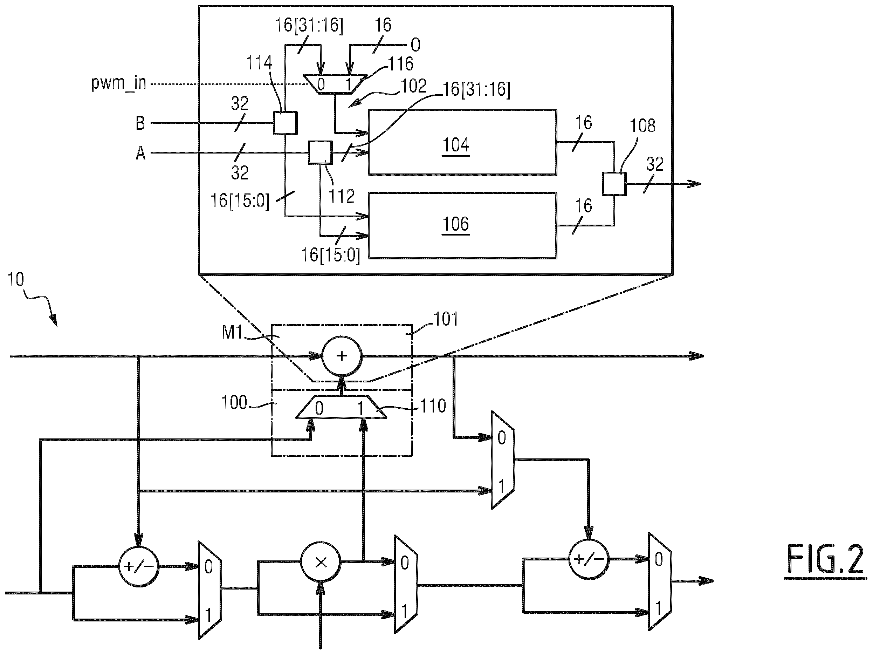

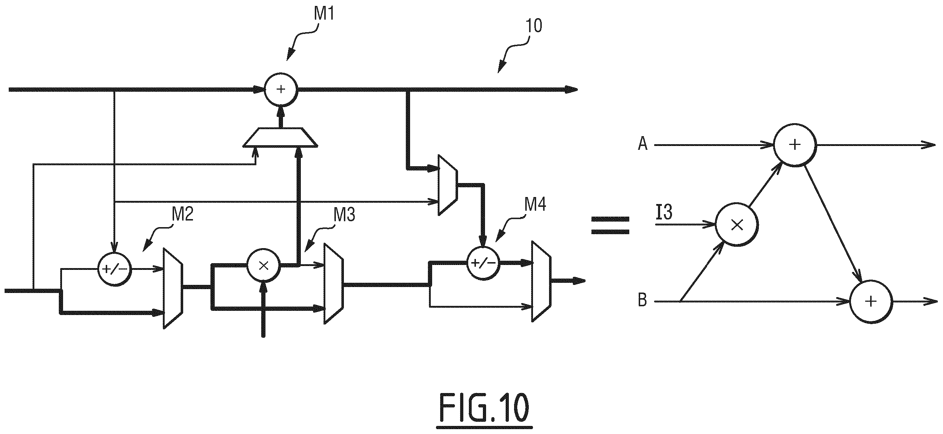

Hereinafter, in reference to figures 2 to 9, it will be detailed the different calculation modes of each calculation module and, in reference to figures 10 to 16, several interesting calculation configurations of the calculation accelerator 10 (which corresponds to operations made in Crystals-KYBER or HQC).

In the present case, the calculation accelerator 10 comprises four calculation modules, namely a first calculation module M1, a second calculation module M2, a third calculation module M3 and a fourth calculation module M4.

Each calculation module M1 to M4 is an hardware circuitry, meaning that each calculation module M1 to M4 is made of hardware components.

Each calculation module M1 to M4 is now successively described.

The first calculation module M1 is represented on figure 2.

The first calculation module M1 is configured to apply a first operation $O_{M1}$ on its input signals.

According to this example, the input signals of the first calculation module M1 are the first input signal I1 of the calculation accelerator 10, the second input signal I2 of the calculation accelerator 10 and an output of the third calculation module M3.

The first calculation module M1 is further configured to output a first result signal RS1, the first result signal RS1 being the result of the application of the first operation $O_{M1}$ on two of the input signals of the first calculation module M1.

As indicated before, the first calculation module M1 is configurable between several calculation modes, each calculation mode corresponding to a respective function.

A first calculation mode of the first calculation module M1 corresponds to a mode wherein the first operation $O_{M1}$ is a modular addition.

By definition, the modular addition is an integer addition, which carried out modulo a given modulus q.

The computation of the result depends on two possible case: the first case keeps the result of the two values itself, while for the second case, there is the subtract of the modulo q (performed as addition of the 2's complement) in order to respect the required value range.

Mathematically, this operation can be written as follows:

$$c = (a + b)\,mod\,q \;\rightarrow\; c = \begin{cases} a + b < q: \; a + b \\ a + b \geq q: \; a + b + (\sim q) + 1 \end{cases}$$

Where:

- a and b are the input values on which the modular addition is to be carried out, and
- c is the result of the modular addition, and
- $\sim x$ designates the bitwise not operation.

In the case of the cryptosystem Crystals-Kyber, the modulus q is fixed to 3329. It is assumed that this value is used by the calculation accelerator 10.

It can be noted here that there exists a 2's complement equivalence: given a number x, the 2's complement of $x = (\sim x + 1)$. This implies that the subtraction of a number is equal to the addition of the 2's complement of the number itself.

A second calculation mode of the first calculation module M1 corresponds to a mode wherein the first operation $O_{M1}$ is a carryless addition.

A third calculation module of the first calculation module M1 corresponds to a mode wherein the first operation $O_{M1}$ is a carry addition with modular division by 2 modulo q.

Hereinafter, each component of a module MX will be referenced by a number with three figures, the first one being X.

As apparent from figure 2, the first calculation module M1 comprises an input unit 100 and a calculation unit 101.

As indicated previously, the input unit 100 is adapted to receive three inputs, which are the first input signal I1 of the calculation accelerator 10, the second input signal I2 of the calculation accelerator 10 and the output of the third calculation module M3, and to obtain two signals on which calculations are to be made by the first calculation module M1.

Said signals on which calculations are to be made are named selected signals A and B.

This name of "selected signals" comes from the fact that the input unit 100 is further provided with an input selector 110 arranged to select a signal between the second input signal I2 of the calculation accelerator 10 and the output of the third calculation module M3.

The input selector 110 is a multiplexer controlled by the value of the configuration signal mux_sel5.

In the illustrated example, the second input signal I2 of the calculation accelerator 10 is selected when the configuration signal mux_sel5 is equal to 0 whereas the output of the third calculation module M3 is selected when the configuration signal mux_sel5 is equal to 1.

In other words, in the present implementation, the first selected signal A is the first input signal I2 of the calculation accelerator 10 and the second selected signal B is either equal to the second input signal I2 of the calculation accelerator 10 (when mux_sel5 = 0) or to the output of the third calculation module M3 (when mux_sel5 = 1).

The calculation unit 101 comprises a dividing unit 102, a first addition unit 104, a second addition unit 106 and a concatenating unit 108.

The first addition unit 104 and the second addition unit 106 are controlled by a dedicated signal, which is not shown for the sake of clarity in the figure.

The dividing unit 102 is adapted to divide the first selected signal A and the second selected signal B into two parts, one part corresponding to the bits to be provided to the first addition unit 104 and the second part to the second addition unit 106.

In the case of figure 2, the dividing unit 102 comprises a first separator 112, a second separator 114 and a multiplexer 116.

The first separator 112 is adapted to extract from the first selected signal A, the value of the bits from 16 to 31 (on its first output) and the value of the bits from 0 to 15 (on its second output).

In the figure, the number of bits is indicated when relevant: here before the first separator 112, a reference sign 32 indicates that the signal is on 32 bits whereas, after the first separator 112, a reference sign 16 indicates that the signal is on 32 bits. In addition, to indicate which bits are concerned, the notation [a;b] is used meaning that the bits from b to a are taken.

The first output of the first separator 112 is connected to a first input of the first addition unit 104 while the second output of the first separator 112 is connected to a first input of the second addition unit 106.

Similarly, the second separator 114 is adapted to extract from the second selected signal B, the value of the bits from 16 to 31 (on its first output) and the value of the bits from 0 to 15 (on its second output).

The first output of the second separator 114 is connected to a second input of the first addition unit 104 through the multiplexer 116 while the second output of the second separator 114 is connected to a second input of the second addition unit 104.

More precisely, the multiplexer 116 takes as inputs the value of the bits from 16 to 31 of the second selected signal B and 0 coded on 16 bits and outputs one of the inputs in function of the value of a signal pwm_in (the output is the second signal B when pwm_in is equal to 0 and 0 when pwm_in is equal to 1).

The concatenating unit 108 takes as inputs the output of each addition unit 104 and 106 and outputs the concatenation of the two inputs.

More precisely, the concatenating unit 108 provides as output a 32 bits value with bits 0 to 15 corresponding to the output of the first addition unit 104 and the bits 16 to 31 corresponding to the output of the second addition unit 106.

The first addition unit 104 and second addition unit 106 are identical, so that only the second addition unit 106 is further described hereinafter.

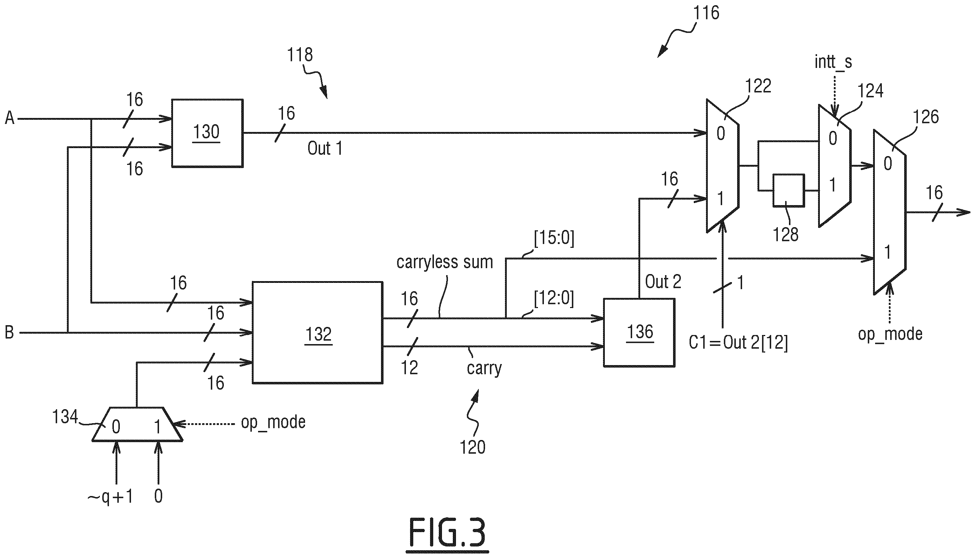

As represented on figure 3, the second addition module 106 comprises two calculation lines 118 and 120, several multiplexers 122, 124 and 126 and a division block 128.

The first calculation line 118 is adapted to calculate the sum of the first selected signal A and the second selected signal B.

For this, the first calculation line 118 comprises an adder 130 taking as inputs the value of the first selected signal A and the value of the second selected signal B and providing as output a signal named Out1, which is the sum of said values. This means that:

$$Out1 = A + B$$

Such addition is carried out on 13 bits, meaning that an extractor adapted to extract 13 bits of the signal A and B is present (and not represented on figure 3 for clarity).

The output of the adder 130 is the signal Out1, which is coded on 16 bits.

In this example, the 3 MSB bits are taken equal to 0.

The second calculation line 120 is distinct from the first calculation line 118 and is adapted to calculate a carry addition.

The second calculation line 120 comprises a carry save adder 132, an input selector 134 and an adder 136.

The carry save adder 132 takes three inputs and provides with two outputs.

The first input of the carry save adder 132 is the value of the first selected signal A, the second input of the carry save adder 132 is the value of the second selected signal B and the third input of the carry save adder 132 is the output of the input selector 134.

The input selector 134 is, here, a multiplexer enabling to select between the modulus ~q+1 and the value 0. The input selector 134 is controlled by the value of the configuration signal op_mode. With a signal op_mode equal to 0, the output of the input selector 62 is the 2's complement whereas, with a signal op_mode equal to 1, the output of the input selector 62 is equal to 0.

The carry save adder 132 calculates on its first output the sum obtained by adding the bits of the three inputs carryless (without any carry propagation) and on its second output the carries from the previous individual sums of each bit of the three inputs.

In the present case, the first output is thus named "carryless sum" and is calculated on 16 bits, while the second output is named "carry" and is calculated on 13 bits.

Such signal "carry" is shifted left by one position, so that its value could be mathematically written as carry[11:0],0 resulting in a 13 bits size.

The adder 136 calculates the sum of the outputs of the carry save adder 132, namely the sum of the signal "carryless sum" and the second output "carry".

Such addition is carried out on 13 bits, meaning that an extractor adapted to extract 13 bits of the signal "carryless sum" is present (and not represented on figure 3 for clarity). The output of the adder 136 is the signal Out2, which is coded on 16 bits. In this example, the 3 MSB bits are taken equal to 0.

The first multiplexer 122 takes as output the signal named Out1 (output of the first calculation line 48) and the signal named Out2 (output of the second calculation line 50).

The first multiplexer 122 is controlled by the value of the signal named C1.

When the signal C1 is equal to 1, this means that a carry is implied so that the result of the second calculation line 50 is to be selected, while, when the signal C1 is equal to 0, this means that no carry is implied so that the result of the first calculation line 48 is to be selected.

The first multiplexer 122 is thus adapted to select the correct value for the first operation among the results of both calculation lines based on the value of the signal out2.

In other words, on the first calculation line 118, only the addition of the two operands is handled, while, on the second calculation line 120, the modulus q is subtracted from this same sum. Recalling that subtracting a value is equivalent to adding the two's complement of the value itself, this sum of the three values in the second calculation line 120 below can be performed through the carry save adder 132, which results in the sum without carry and, as second output, the generated carries themselves. Subsequently, these two values are added to obtain the final result expressed in the case where :

$$a + b \geq q : a + b + (\sim q) + 1$$

Once the two different results have been calculated on the respective branches, the first multiplexer 122 selects the correct one thanks to the control signal Out2, and it is propagated to the rest of the fourth calculation module M4.

The division block 128 is adapted to calculate the modular division by 2 modulo q.

The division block 128 takes as output the output of the first multiplexer 122.

So as to be able to select between the direct output of the first multiplexer and the output of the division block 128 (result of a carry modular addition with modular division by 2 modulo q), the second multiplexer takes as input these two signals and selects one of these signals according to the value of the configuration signal intt_s.

More precisely, when the configuration signal intt_s is equal to 0, the output of the second multiplexer 124 is the direct output of the first multiplexer (result of a sum with carry) whereas, when the configuration signal intt_s is equal to 1, the output of the second multiplexer 124 is the result of a carry modular addition with modular division by 2 modulo q (output of division block 128).

The output of the second multiplexer 124 is linked to one input of the third multiplexer 126, the other input of the third multiplexer 126 being the signal "carryless signal".

The configuration of the third multiplexer 126 is ensured by the configuration signal op_mode. More precisely, when the configuration signal op_mode is equal to 1, the output of the third multiplexer 126 is the carryless sum on 16 bits, whereas, when the configuration signal op_mode is equal to 0, the output of the third multiplexer 126 is the output of the second multiplexer 124.

As the output of the third multiplexer 126 corresponds to the output of the second adder 116, it appears that the second adder 116 can output:

- the result on 16 bits of a carry modular addition of selected signals A and B (with op_mode equal to 0 and intt_s equal to 0), this output corresponding to the first calculation mode of the first calculation module M1;
- the result on 16 bits of a carryless sum of selected signals A and B (with op_mode equal to 1), this output corresponding to the second calculation mode of the first calculation module M1, and
- the result on 16 bits of a carry modular addition with modular division by 2 modulo q of selected signals A and B (with op_mode equal to 0 and intt_s equal to 1), this output corresponding to the third calculation mode of the first calculation module M1.

Such operating of the first calculation module M1 can be summarized by the following table:

| Calculation mode | Value of op_mode | Value of intt_s | First operation $O_{M1}$ |
|---|---|---|---|
| First calculation mode | 0 | 0 | Modular addition of A and B |
| Second calculation mode | 1 | 0/1 | Carryless addition of A and B |
| Third calculation mode | 0 | 1 | Carry addition with modular division by 2 modulo q of A and B |

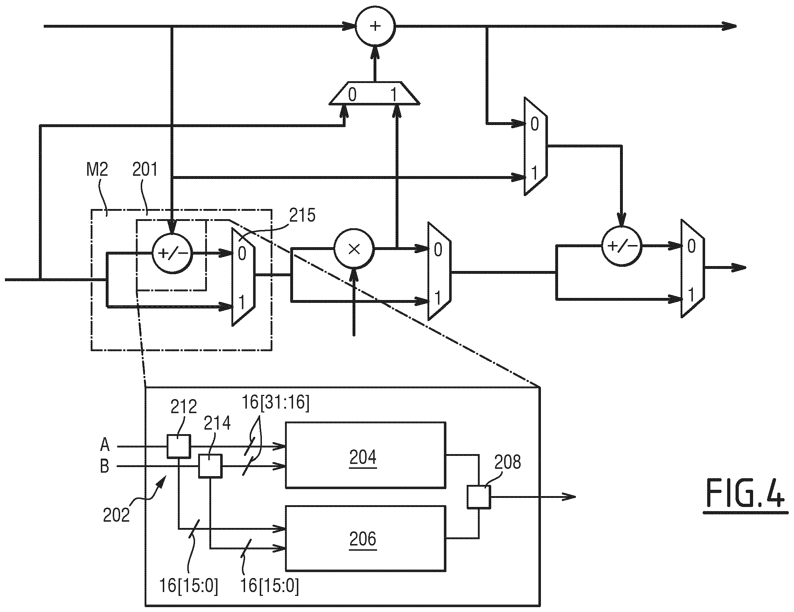

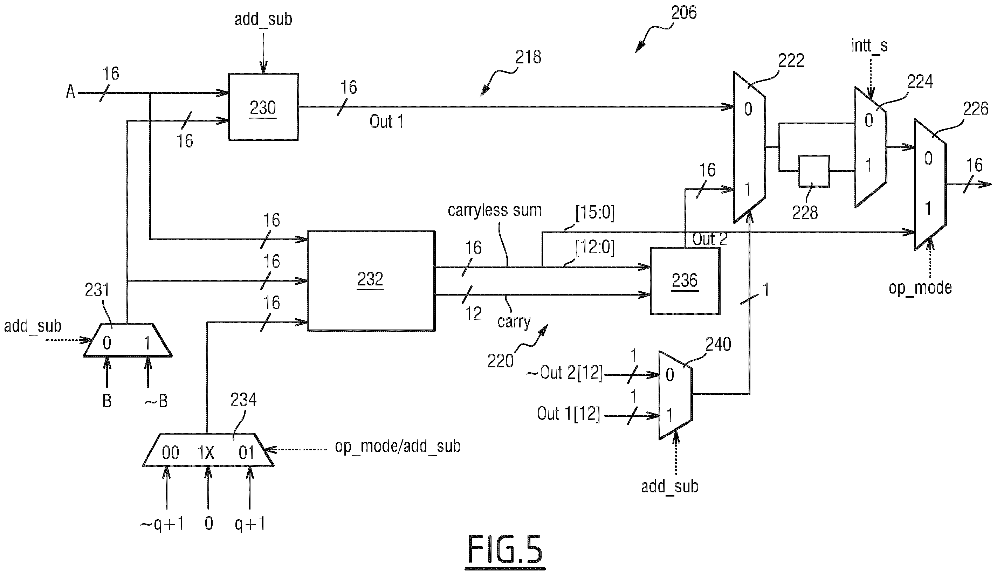

The second calculation module M2 is represented on figures 4 and 5.

The second calculation module M2 is configured to apply a second operation $O_{M2}$ on its input signals.

According to this example, the input signals of the second calculation module M2 are the first input signal I1 of the calculation accelerator 10 and the second input signal I2 of the calculation accelerator 10.

The second calculation module M2 is further configured to output a second result signal RS2, the second result signal RS2 being the result of the application of the second operation $O_{M2}$ on the input signals of the second calculation module M2.

As indicated before, the second calculation module M2 is configurable between several calculation modes, each calculation mode corresponding to a respective function.

In the present case, the second calculation module M2 is configurable between four calculation modes, which are a disabled mode, a first calculation mode, a second calculation mode, a third calculation mode and a fourth calculation mode.

The disabled mode is a mode wherein the second operation $O_{M2}$ is identity with relation to one of the input signals of the second calculation module M2.

The first calculation mode of the second calculation module M2 corresponds to a mode wherein the second operation $O_{M2}$ is a modular subtraction.

By definition, the modular subtraction is an integer subtraction, which carried out modulo a given modulus q.

As for modular addition, the calculation of the result depends on two possible cases. The first case is computed as addition between the first operand and the 2's complement of the second one, while for the second case, there is the further addition of the modulo q value during the calculation.

Mathematically, this operation can be written as follows:

$$c = (a - b) \bmod q \ \rightarrow c = \begin{cases} (a + (\sim b) + 1) < q : \ a + (\sim b) + 1 \\ (a + (\sim b) + 1) \geq q : \ a + (\sim b) + q + 1 \end{cases}$$

Where:

- a and b are the input values on which the modular subtraction is to be carried out, and
- c is the result of the modular subtraction.

The second calculation mode of the second calculation module M2 corresponds to a mode wherein the second operation $O_{M2}$ is a modular addition.

The third calculation mode of the second calculation module M2 corresponds to a mode wherein the second operation $O_{M2}$ is a carryless addition.

The fourth calculation module of the second calculation module M2 corresponds to a mode wherein the second operation $O_{M2}$ is a carry substraction with modular division by 2 modulo q.

The second calculation module M2 comprises similar elements to the first calculation module M1. This similarity is reflected in the reference signs. For instance, the first selector is referred to as 112 in the first calculation module M1 whereas the corresponding element for the second calculation module M2 is referred to as 212.

The same remarks therefore applies to these elements and are not repeated here for concision. Only the differences are explained hereinafter. The same two last figures are used for the reference sign when the elements are comparable.

The second calculation module M2 is deprived of input selector, the inputs used in the calculation unit 201 being the first signal A and the second signal B (corresponding respectively to the first input signal I1 of the calculation accelerator 10 and to the second input signal I2 of the calculation accelerator 10).

The second calculation module M2 further comprises an additional unit, which is a disabling unit 215.

The disabling unit 215 is a multiplexer taking as inputs the output of the second calculation unit 201 and the second signal B and outputting one of the two values as output of the second calculation module M2.

Although the disabling unit 215 could be construed as a selection unit, it provides the second calculation mode M2 with the possibility of being disabled in the sense that the calculations made are not further used by the calculation accelerator 10. Hence its name.

The disabling unit 215 is controlled by the configuration signal mux_sel1. More precisely, when mux_sel1 is equal to 0, the output of the disabling unit 215 is the output of the second calculation unit 201, whereas, when mux_sel1 is equal to 1, the output of the disabling unit 215 is equal to the value of the second signal B.

This means that when the disabling unit 215 is activated by the configuration signal mux_sel1, the second calculation module M2 is in the disabled mode in which the second operation applied is identity with relation to one input (here the second signal B).

When comparing figure 5 with figure 3, it appears that the second unit 206 (which could be qualified as adding/subtracting unit due to its role) of the second module M2 comprises two additional multiplexers 231 and 240.

The first additional multiplexer 231 provides the first calculation line 218 and the second calculation line 220 with subtraction capacities.

Indeed, the first additional multiplexer 231 takes as input the second signal B and the opposite of the second signal ~B.

The first additional multiplexer 231 is controlled by the configuration signal add_sub. More precisely, when the configuration signal add_sub is equal to 0, the output of the first additional multiplexer 231 takes the value of the second signal B, whereas, when the configuration signal add_sub is equal to 1, the output of the first additional multiplexer 231 takes the opposite of the second signal -B.

The output of the first additional multiplexer 231 is connected to the second input of the adder 230, so that the adder 230 operates as a subtractor when the configuration signal add_sub is equal to 1.

In other words, the configuration signal add_sub controlates the operating of the adder 230 in so far as the adder 230 either provides with the result of an addition of its inputs or of a subtraction of its inputs in accordance with the value of said configuration signal add_sub. The adder will thus add the +1 in the operation $a + (\sim b) + 1$ in accordance with the value of the configuration signal add_sub.

Similarly, the output of the first additional multiplexer 231 is connected to the second input of the carry save adder 232, so that the carry save adder 232 operates as a subtractor when the configuration signal add_sub is equal to 1.

The third value inputted to the first additional multiplexer 231 is connected with the input selector 234.

Compared to the input selector 134 of the first calculation module M1, the input selector 234 is, here, a multiplexer enabling to select between three signals (instead of 2) under the control of two configuration signals (instead of 1).

The three signals to be selected are q+1, 0 and ~q+1 and the input selector 134 is controlled by the value of the configuration signal op_mode and by the value of the configuration signal add_sub.

With the configuration signal op_mode equal to 0, the output of the input selector 62 is equal to ~q+1 if the configuration signal add_sub equal to 0 whereas the output of the input selector 62 is equal to q+1 if the configuration signal add_sub equal to 1.

With the configuration signal op_mode equal to 1, the output of the input selector 62 is equal to 0 independently of the value of the configuration signal add_sub.

The second additional multiplexer 240 serves to generate the signal controlling the first multiplexer 222.

By comparison with the first calculation module M1, the presence of the second additional multiplexer 240 is justified by the fact that the second calculation module M2 can serve both for addition and subtraction, resulting in a different signal to be used.

More precisely, in presence of an addition, the control signal of the first multiplexer 222 is -out2[12], a 1-bit signal whereas, in presence of a subtraction, the control signal of the first multiplexer 222 is out1[12], a 1-bit signal.

The second additional multiplexer 240 operates this way since it takes as inputs -out2[12] and out1[12] (on 1-bit each) and is controlled by the configuration signal add_sub (which is equal to 0 if the operation is an addition and is equal to 1 if the operation is a subtraction).

Given the fact that all the elements are similar to the corresponding ones of the first calculation module M1, it appears that the second addition/subtraction unit 206 of the second calculation module M2 can output:

- the result on 16 bits of a carry modular subtraction of selected signals A and B (with op_mode equal to 0, add_sub equal to 1 and intt_s equal to 0), this output corresponding to the first calculation mode of the second calculation module M2;
- the result on 16 bits of a carry modular addition of selected signals A and B (with op_mode equal to 0, add_sub equal to 0 and intt_s equal to 0), this output corresponding to the second calculation mode of the second calculation module M2;
- the result on 16 bits of a carryless sum of selected signals A and B (with op_mode equal to 1, add_sub equal to 0 and intt_s equal to 0), this output corresponding to the third calculation mode of the second calculation module M2, and
- the result on 16 bits of a carry modular subtraction with modular division by 2 modulo q of selected signals A and B (with op_mode equal to 0, add_sub equal to 1 and intt_s equal to 1), this output corresponding to the fourth calculation mode of the second calculation module M2.

Such operating of the second calculation module M2 can be summarized by the following table:

| Calculation mode | Value of mux_sel1 | Value of op_mode | Value of add_sub | Value of intt_s | Second operation $O_{M2}$ |
|---|---|---|---|---|---|
| Disabled mode | 1 | - | - | - | identity |

(continued)

| Calculation mode | Value of mux_sel1 | Value of op_mode | Value of add_sub | Value of intt_s | Second operation $O_{M2}$ |
|---|---|---|---|---|---|
| First calculation mode | 0 | 0 | 1 | 0 | Modular subtraction of A and B |
| Second calculation mode | 0 | 0 | 0 | 0 | Modular addition of A and B |
| Third calculation mode | 0 | 1 | 0 | 0 | Carryless addition of A and B |
| Fourth calculation mode | 0 | 0 | 1 | 1 | Carry subtraction with modular division by 2 modulo q of A and B |

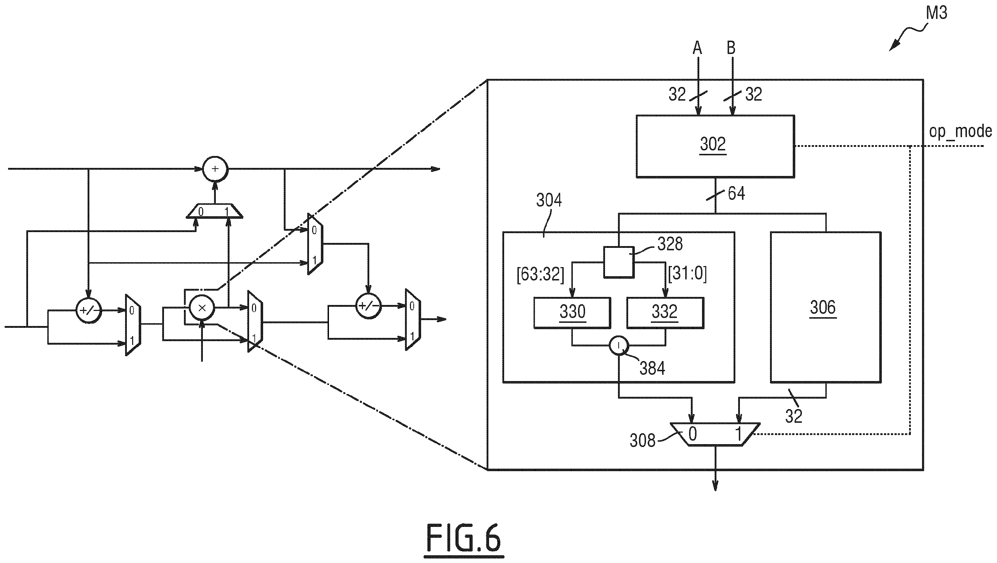

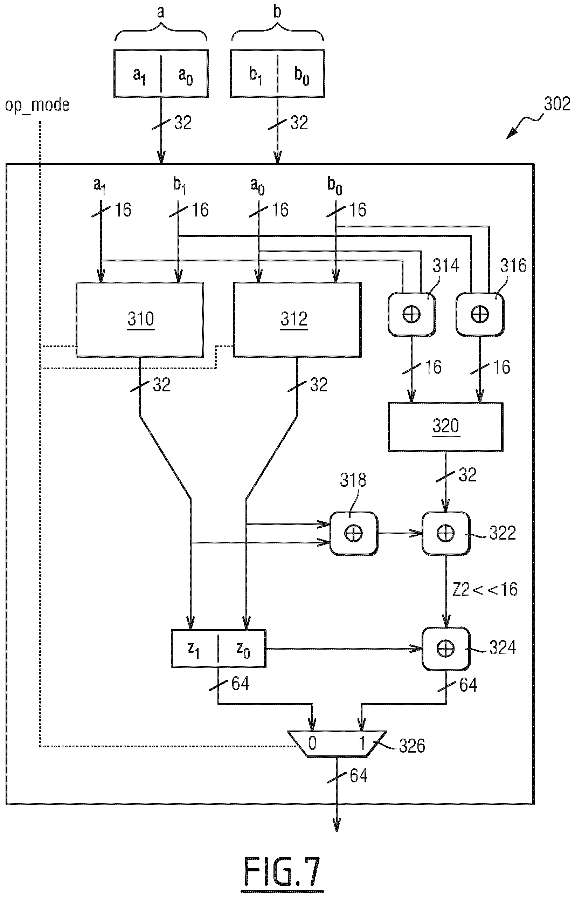

The third calculation module M3 is represented on figures 6 and 7.

The third calculation module M3 is configured to apply a third operation $O_{M3}$ on its input signals.

According to this example, the input signals of the third calculation module M3 are the second result signal RS2 and the third input signal I3 of the calculation accelerator 10.

The third calculation module M3 is further configured to output a third result signal RS3, the third result signal RS3 being the result of the application of the third operation $O_{M3}$ on the input signals of the third calculation module M3.

As indicated before, the third calculation module M3 is configurable between several calculation modes, each calculation mode corresponding to a respective function.

In the present case, the second calculation module M1 is configurable between two calculation modes, which are a first calculation mode and a second calculation mode.

The first calculation mode of the third calculation module M3 corresponds to a mode wherein the third operation $O_{M3}$ is an integer multiplication (carry multiplication).

The second calculation mode of the third calculation module M3 corresponds to a mode wherein the third operation $O_{M3}$ is a carryless multiplication.

As apparent from figure 6, the third calculation module M3 comprises a multiplier unit 302, two reduction units 304 and 306 and a selection unit 308.

The multiplier unit 302 is adapted to performing carry/carryless multiplication.

The operating of the multiplier unit 302 relies on an implementation according to an hybrid 2-way Karatsuba technique, which is now briefly explained.

Given two numbers a and b on 32-bits, each of them is divided into two parts (respectively $a_1$ and $a_0$ for a and $b_1$ and $b_0$ for b) a which are consumed, through operations on 16-bits, in the calculation of three values $z_0$, $z_1$ and $z_2$ by the application of the following formulas:

$$z_0 = a_0 *_{carry /carryless} b_0$$

$$z_1 = a_1 *_{carry /carryless} b_1$$

$$z_2 = (a_0 \ xor \ a_1) *_{carryless} (b_0 \ xor \ b_1) \ xor \ (z_0 \ xor \ z_1)$$

where:

- $*carry /carryless$ designates either a carry multiplication or a carryless multiplication, and
- $*carryless$ designates a carryless multiplication.

An example of hardware implementation of such a multiplier unit 302 is further detailed in figure 7.

The multiplication blocks 310 and 312 are adapted to implement the first and second previous formula to respectively obtain $z_0$ and $z_1$.

The change of calculation mode between carry and carryless is controlled by the value of the configuration signal op_mode (carry when the value is equal to 0 and carryless when the value is equal to 1).

For implementing the third formula, the multiplier unit 302 is provided with three xor blocks 314, 316 and 318 arranged to respectively calculate the value of $a_0 \ xor \ a_1$, the value of $b_0 \ xor \ b_1$ and the value of $z_0 \ xor \ z_1$.

The carryless multiplication is implemented by the multiplication block 320, which takes as inputs the output of the first xor block 314 and the second xor block 316.

The fourth xor block 322 enables to obtain the value of the quantity $z_2$.

The fifth xor block 324 takes as inputs the three quantities $z_0$, $z_1$ and $z_2$.

The multiplier unit 302 further comprises a multiplexer enabling to choose the carry result ($z_0$ and $z_1$) or the carryless result depending on the value of the configuration signal op_mode (carry when the value is equal to 0 and carryless when the value is equal to 1).

The first reduction unit 304 is adapted to implement a Barrett's reduction.

Such first reduction unit 304 is used when the multiplication carried out by the multiplier unit 302 is a carry multiplication.

The first reduction unit 304 comprises a dividing unit 328 adapted to divide the output of the multiplier unit 302 into two 32-bits values.

The first reduction unit 304 further comprises two respective reduction units 330 and 332 implementing a Barrett's algorithm on a respective 32-bits values.

The results of each reduction unit 330 and 332 are concatenated through a concatenation unit 334, which also belongs to the first reduction unit 304.

The second reduction unit 306 is adapted to implement a reduction with the irreducible polynomial equal to $x^{32} + x^{22} + x^2 + x + 1$.

Such second reduction unit 306 is used when the multiplication carried out by the multiplier unit 302 is a carryless multiplication.

The selection unit 308 is a multiplexer enabling to select the result of the carry multiplication or the carryless multiplication.

In the present case, the selection unit 308 is commanded by the configuration signal op_mode (carry when the value is equal to 0 and carryless when the value is equal to 1).

Such operating of the second calculation module M2 can be summarized by the following table:

| Calculation mode | Value of op_mode | Third operation $O_{M3}$ |
|---|---|---|
| First calculation mode | 0 | Carry multiplication of A and B |
| Second calculation mode | 1 | Carryless multiplication of A and B |

The selection unit 308 is adapted to select the output of the third calculation module M3 among the outputs of the reduction units 304 and 306.

In the embodiment of figure 6, the selection unit 308 is a multiplexer.

The selection unit 308 takes as inputs the output of the first reduction unit 304 and the output of the second reduction unit 306.

The control signal of the multiplexer is the configuration signal op_mode.

More precisely, when the configuration signal op_mode has the value 0, the output of the selection unit 308 is the output of the first reduction unit 304 while, when the configuration signal op-mode has the value 1, the output of the selecting unit 308 is the output of the second reduction unit 306.

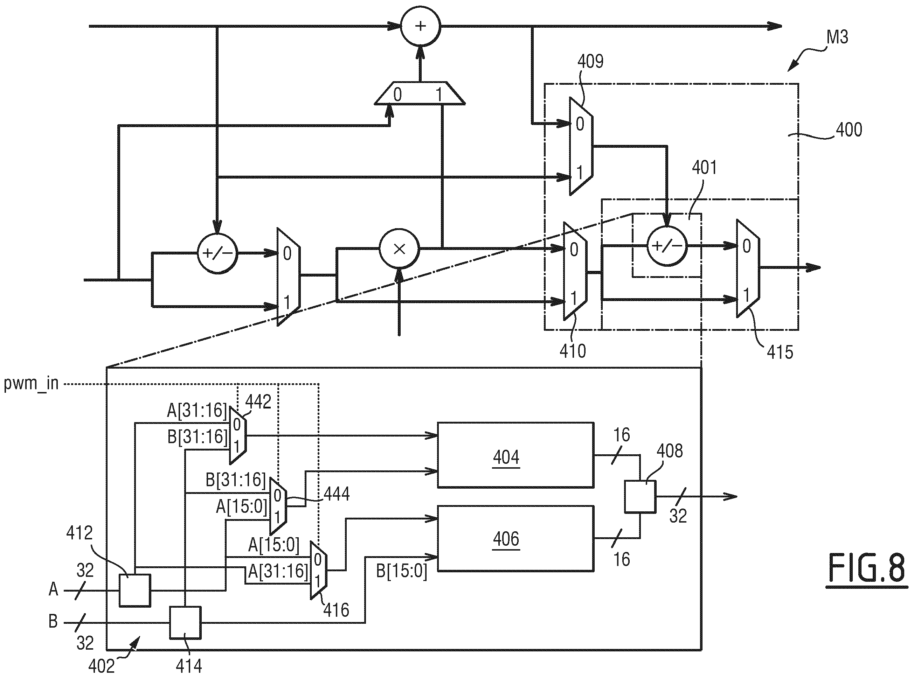

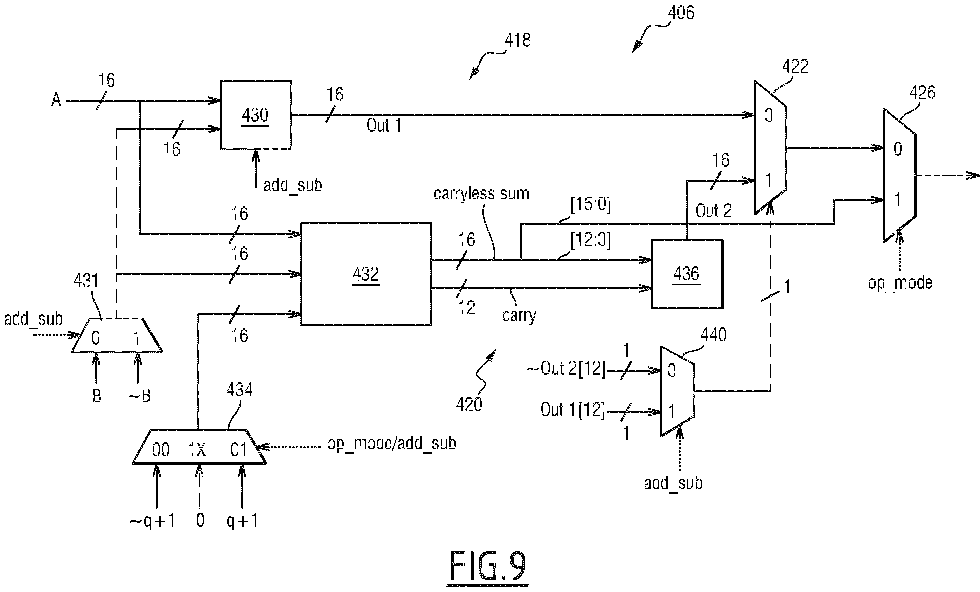

The fourth calculation module M4 is represented on figures 8 and 9.

The fourth calculation module M4 is configured to apply a fourth operation $O_{M4}$ on its input signals.

According to this example, the input signals of the fourth calculation module M4 are the first result signal RS1, the second result signal RS2, the third result signal RS3 and the first input signal I1 of the calculation accelerator 10.

The fourth calculation module M4 is further configured to output a fourth result signal RS4, the fourth result signal RS4 being the result of the application of the fourth operation $O_{M4}$ on the input signals of the fourth calculation module M4.

As indicated before, the fourth calculation module M4 is configurable between several calculation modes, each calculation mode corresponding to a respective function.

In the present case, the fourth calculation module M4 is configurable between four calculation modes, which are a disabled mode, a first calculation mode, a second calculation mode and a third calculation mode.

The disabled mode is a mode wherein the fourth operation $O_{M4}$ is identity with relation to one of the input signals of the fourth calculation module M4.

The first calculation mode of the fourth calculation module M4 corresponds to a mode wherein the fourth operation $O_{M4}$ is a modular subtraction.

The second calculation mode of the fourth calculation module M4 corresponds to a mode wherein the fourth operation $O_{M4}$ is a modular addition.

The third calculation mode of the fourth calculation module M4 corresponds to a mode wherein the fourth operation $O_{M4}$ is a carryless addition.

The fourth calculation module M4 comprises similar elements to the second calculation module M2. This similarity is reflected in the reference signs. For instance, the first selector is referred to as 212 in the second calculation module M2 whereas the corresponding element for the fourth calculation module M2 is referred to as 412.

The same remarks therefore applies to these elements and are not repeated here for concision. Only the differences are explained hereinafter. The same two last figures are used for the reference sign when the elements are comparable.

As for the first calculation module M1, the fourth calculation module M4 is provided with an input unit 400.

As indicated previously, the input unit 400 is adapted to receive fourth inputs, which are the first input signal I1 of the calculation accelerator 10, the first result signal RS1, the second result signal RS2 and the third result signal RS3 and to obtain two signals on which calculations are to be made by the fourth calculation module M4.

Said signals on which calculations are to be made are named selected signals A and B.

This name of "selected signals" comes from the fact that the input unit 100 is further provided with two input selectors 109 and 110 respectively arranged to select the first selected signal A between the second input signal I2 of the calculation accelerator 10 and the first result signal RS1 and the second signal B between the second result signal RS2 and the third result signal RS3.

The first input selector 109 is a multiplexer controlled by the value of the configuration signal mux_sel4.

In the illustrated example, the first result signal RS1 is selected when the configuration signal mux_sel4 is equal to 0 whereas the first input signal I1 of the calculation accelerator 10 is selected when the configuration signal mux_sel4 is equal to 1.

The second input selector 109 is a multiplexer controlled by the value of the configuration signal mux_sel3.

In the illustrated example, the third result signal RS3 is selected when the configuration signal mux_sel3 is equal to 0 whereas the second result signal RS2 is selected when the configuration signal mux_sel3 is equal to 1.

In other words, in the present implementation, the first selected signal A is the first result signal RS1 (when mux_sel4 = 0) or the first input signal I1 of the calculation accelerator 10 (when mux_sel4 = 1) and the second selected signal B is the third result signal RS3 (when mux_sel3 = 0) or the second signal RS2 (when mux_sel3 = 1).

In addition to the first separator 412 and the second separator 414, the dividing unit 402 comprises a first additional multiplexer 442, a second additional multiplexer 444 and a third additional multiplexer 444.

The first additional multiplexer 442, the second additional multiplexer 444 and the third additional multiplexer 444 are arranged so as to swap the input signals of the adding/subtracting units 404 and 406 (as before, their respective control signals are not represented for the sake of clarity).

More precisely, when the configuration signal pwm_in is equal to 0, the situation is similar to the one of the second calculation module M2 with the first adding/subtracting unit 404 receiving the signal A [31:16] and the signal B [31:16] and the second adding/subtracting unit 406 receiving the signal A [15:0] and the signal B [15:0].

By contrast, when the configuration signal pwm_in is equal to 1, the first adding/subtracting unit 404 receives the signal B [31:16] and the signal A [15:0] and the second adding/subtracting unit 406 receiving the signal A [31:16] and the signal B [15:0].

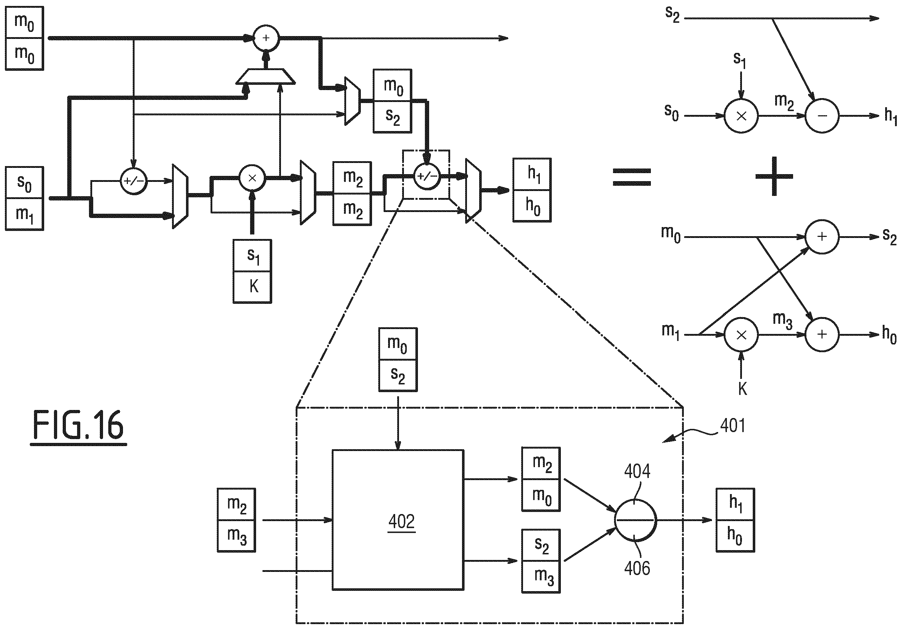

This provides the fourth calculation M2 with the capability of modifying the arrangement of the input signals to perform the operation illustrated on figure 16.

As can be seen when comparing figure 9 with figure 5, it appears that the second adding/subtracting unit 406 is identical to the adding/subtracting unit 206 except that the second multiplexer 224 and the division block 228 are not present.

Therefore, it appears that the second addition/subtraction unit 406 of the fourth calculation module M4 can output:

- the result on 16 bits of a carry modular subtraction of selected signals A and B (with op_mode equal to 0 and add_sub equal to 1), this output corresponding to the first calculation mode of the fourth calculation module M4;
- the result on 16 bits of a carry modular addition of selected signals A and B (with op_mode equal to 0, add_sub equal to 0), this output corresponding to the second calculation mode of the fourth calculation module M4;
- the result on 16 bits of a carryless sum of selected signals A and B (with op_mode equal to 1, add_sub equal to 0 and intt_s equal to 0), this output corresponding to the third calculation mode of the fourth calculation module M4, and
- the result of a modular addition (with pwm_in equal to 1, op_mode equal to 0, add_sub equal to 0 and intt_s equal to 0).

Such operating of the fourth calculation module M4 can be summarized by the following table:

| Calculation mode | Value of mux_sel3 | Value of op_mode | Value of add_sub | Fourth operation $O_{M4}$ |
|---|---|---|---|---|
| Disabled mode | 1 | - | - | identity |
| First calculation mode | 0 | 0 | 1 | Modular subtraction of A and B |
| Second calculation mode | 0 | 0 | 0 | Modular addition of A and B |
| Third calculation mode | 0 | 1 | 0 | Carryless addition of A and B |

As apparent from figure 1, the first output signal O1 is the first result signal RS1 whereas the second output signal of the calculation accelerator 10 is the fourth result signal RS4

Thanks to the configuration signals, the value of the first result signal RS1 and the fourth result signal RS4 can be modified resulting in a calculation accelerator 10 is adapted to operate in several calculation configurations.

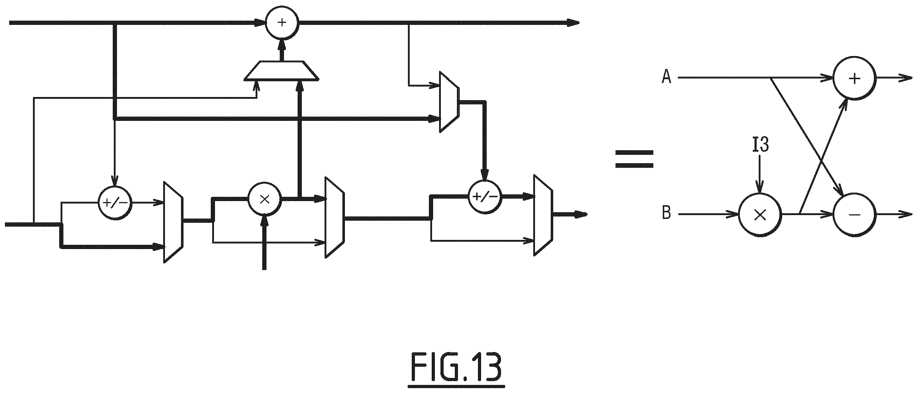

Figures 10 to 12 illustrate calculation configurations corresponding to operations used in the cryptosystem HQC while figures 13 to 16 illustrate calculation configurations corresponding to operations used in the cryptosystem Crystals-KYBER.

Concerning the cryptosystem HQC, the AFFT technique is used. Such technique implies several operations now described.

Given two input binary polynomials, in order to apply HQC, they must be first transformed in the new polynomial basis through the MONO TO_LCH function. At this point, the transformed polynomials are evaluated through a modified version of FFT called FFT_LCH, based on a divide-and-conquer approach.

After that, the results of this operation are processed through point-wise multiplication and subsequently with an inverse FFT ( IFFT_LCH).

Finally, a change in the original polynomial basis (LCH_TO_MONO) is applied to obtain the correct result of the polynomial multiplication.

As for the NTT, also in this case it is possible to identify butterfly-based structure as basic process element in the two main bottleneck functions of this transformation: FFT_LCH and IFFT_LCH. These butterflies contains two carryless adder that are implemented through simple XOR operation and a carryless multiplier with modular operation.

The first calculation configuration illustrated by figure 10 is the carrying out of a function FFT_LCH.

In such calculation configuration:

- the first calculation module M1 is in the second calculation mode, resulting in a first operation $O_{M1}$ being a carryless addition,
- the second calculation module M2 is in the disabled mode, resulting in a second operation $O_{M2}$ being identity,
- the third calculation module M3 is in the second calculation mode, resulting in a third operation $O_{M3}$ being a carryless multiplication, and
- the fourth calculation module M4 is in the third calculation mode, resulting in a fourth operation $O_{M4}$ being a carryless addition.

Considering the operating of each calculation module M1 to M4, this results in a specification combination of value for the configuration signals, which is expressed in the following table:

| Configuration signals | Value |
|---|---|
| op_mode | 1 |
| add_sub | 0 |
| pwm_in | 0 |
| intt_s | 0 |
| mul_sel1 | 1 |
| mul_sel2 | 1 |
| mul_sel3 | 0 |
| mul_sel4 | 0 |
| mul_sel5 | 1 |

The resulting data path is represented on the left part of figure 10, the data path effectively used in the calculation accelerator 10 in such configuration being highlighted by thicker lines.

Functionally, this leads to the calculation configuration illustrated on the right part of figure 10, which is indeed the configuration adapted to calculate the function FFT_LCH.

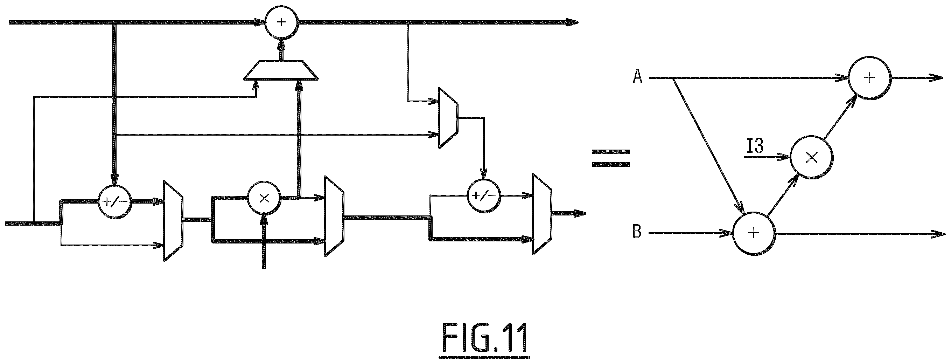

The second calculation configuration illustrated by figure 11 is the carrying out of a function IFFT_LCH.

In such calculation configuration:

- the first calculation module M1 is in the second calculation mode, resulting in a first operation $O_{M1}$ being a carryless addition,
- the second calculation module M2 is in the third calculation mode, resulting in a second operation $O_{M2}$ being a carryless addition,
- the third calculation module M3 is in the second calculation mode, resulting in a third operation $O_{M3}$ being a carryless multiplication, and
- the fourth calculation module M4 is in the disabled mode, resulting in a fourth operation $O_{M4}$ being identity.

With relation to the calculation configuration of figure 10, the only difference is an exchange of calculation mode between the second calculation module M2 and the fourth calculation module M4.

Considering the operating of each calculation module M1 to M4, this results in a specification combination of value for the configuration signals, which is expressed in the following table:

| Configuration signals | Value |
|---|---|
| op_mode | 1 |
| add_sub | 0 |
| pwm_in | 0 |
| intt_s | 0 |
| mul_sel1 | 0 |
| mul_sel2 | 1 |
| mul_sel3 | 1 |
| mul_sel4 | 0 |
| mul_sel5 | 1 |

Functionally, this leads to the calculation configuration illustrated on the right part of figure 11, which is indeed the configuration adapted to calculate the function IFFT_LCH.

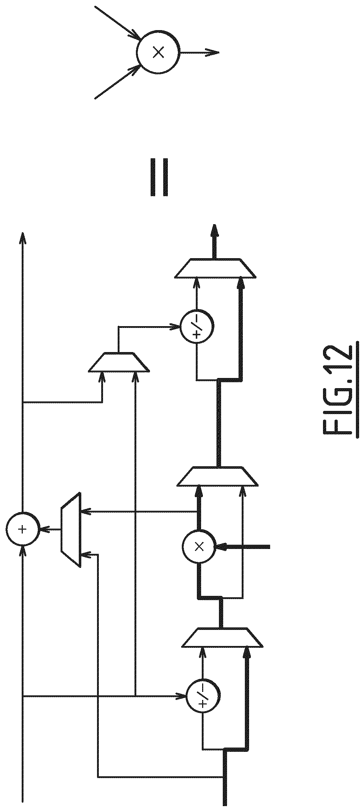

The third calculation configuration illustrated by figure 12 is the carrying out of a function PWM corresponding to a point-wise multiplication.

In such calculation configuration:

- the first calculation module M1 can be in any calculation mode, the result of the first operation $O_{M1}$ not being used in this specific case,
- the second calculation module M2 is in the disabled mode, resulting in a second operation $O_{M2}$ being identity.
- the third calculation module M3 is in the second calculation mode, resulting in a third operation $O_{M3}$ being a carryless multiplication, and
- the fourth calculation module M4 is in the disabled mode, resulting in a fourth operation $O_{M4}$ being identity.

Considering the operating of each calculation module M1 to M4, this results in a specification combination of value for the configuration signals, which is expressed in the following table:

| Configuration signals | Value |
|---|---|
| op_mode | 1 |
| add_sub | 0 |
| pwm_in | 0 |

(continued)

| Configuration signals | Value |
|---|---|
| intt_s | 0 |
| mul_sel1 | 1 |
| mul_sel2 | 0 |
| mul_sel3 | 1 |
| mul_sel4 | 0 |
| mul_sel5 | 0 |

Functionally, this leads to the calculation configuration illustrated on the right part of figure 12, which is indeed the configuration adapted to calculate the function PWM.

The fourth calculation configuration illustrated by figure 13 is the carrying out of a function forward NTT.

Forward NTT relies on the Cooley-Tukey (CT) butterfly configuration where two polynomial coefficient and one constant values are taken as input. This operation follows a divide-and-conquer approach that recursively breaks down input values using a factor of two and process them using CT butterfly configuration structure as process element.

In such calculation configuration:

- the first calculation module M1 is in the first calculation mode, resulting in a first operation $O_{M1}$ being a modular addition,
- the second calculation module M2 is in the disabled mode, resulting in a second operation $O_{M2}$ being identity,
- the third calculation module M3 is in the first calculation mode, resulting in a third operation $O_{M3}$ being an integer multiplication, and
- the fourth calculation module M4 is in the first calculation mode, resulting in a fourth operation $O_{M4}$ being a modular subtraction.

Considering the operating of each calculation module M1 to M4, this results in a specification combination of value for the configuration signals, which is expressed in the following table:

| Configuration signals | Value |
|---|---|
| op_mode | 0 |
| add_sub | 1 |
| pwm_in | 0 |
| intt_s | 0 |
| mul_sel1 | 1 |
| mul_sel2 | 0 |
| mul_sel3 | 0 |
| mul_sel4 | 1 |
| mul_sel5 | 1 |

Functionally, this leads to the calculation configuration illustrated on the right part of figure 13, which is indeed the configuration adapted to calculate the function forward NTT.

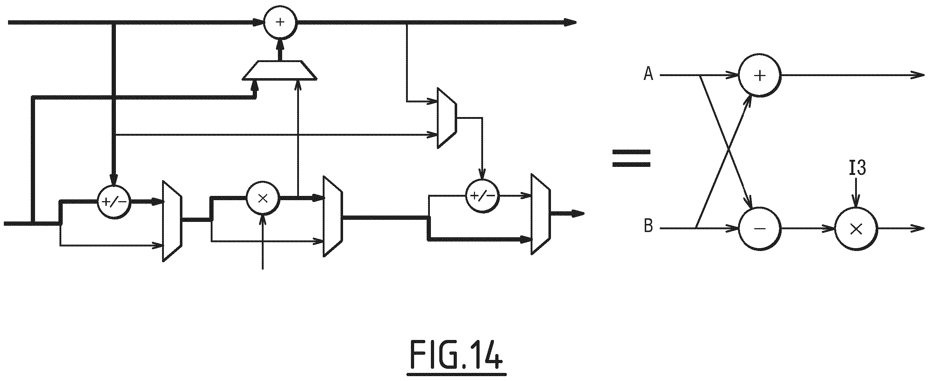

The fifth calculation configuration illustrated by figure 14 is the carrying out of a function inverse NTT.

Inverse NTT relies on the Gentleman-Sande (GS) butterfly configuration where two polynomial coefficient and one constant values are taken as input.

This operation is based on a unit-and-build approach, which is the opposite of the one used in the Forward NTT, that calculates the final result starting from small portions of data that increase at each step by a factor of two.

Compared to the previous butterfly structure, the GS butterfly also contains a division by 2 modulo q, which in fact guarantees the correct calculation of the final result. Given a value x, a modulo q, the modular division by 2 is executed with only shift and one addition by following the formula :

$$\frac{x}{2}(mod\ q) = (x \gg 1) + x[0].\left(\frac{q+1}{2}\right)$$

In such calculation configuration:

- the first calculation module M1 is in the third calculation mode, resulting in a first operation $O_{M1}$ being a modular addition with modular division by 2 modulo q,
- the second calculation module M2 is in the fourth calculation mode, resulting in a second operation $O_{M2}$ being a modular subtraction with modular division by 2 modulo q,
- the third calculation module M3 is in the first calculation mode, resulting in a third operation $O_{M3}$ being an integer multiplication, and
- the fourth calculation module M4 is in the disabled mode, resulting in a fourth operation $O_{M4}$ being identity.

Considering the operating of each calculation module M1 to M4, this results in a specification combination of value for the configuration signals, which is expressed in the following table:

| Configuration signals | Value |
|---|---|
| op_mode | 0 |
| add_sub | 1 |
| pwm_in | 0 |
| intt_s | 1 |
| mul_sel1 | 0 |
| mul_sel2 | 0 |
| mul_sel3 | 1 |
| mul_sel4 | 0 |
| mul_sel5 | 0 |

Functionally, this leads to the calculation configuration illustrated on the right part of figure 14, which is indeed the configuration adapted to calculate the function inverse NTT.

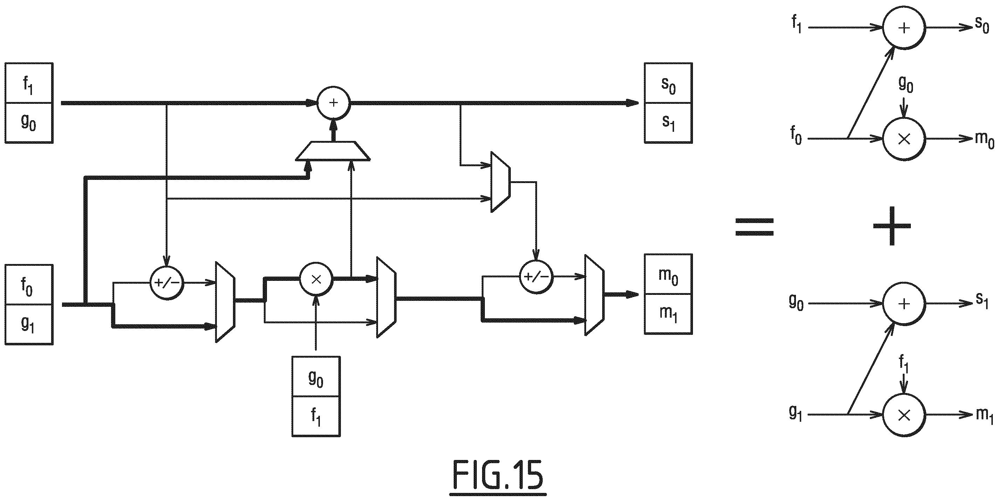

The successive implementation of the sixth and seventh configuration calculations of figures 15 and 16 leads to carrying out a point-wise multiplication.

Point-wise multiplication consists of multiplying forward NTT output results (also called points) of the two input polynomial respectively. For this reason, this operation is sometimes named coefficient-wise multiplication.

Each of this point is represented as a couple of values, so the multiplication between two of them is not so straightforward and requires more operations to be executed.

Using the 2-way Karatsuba technique, such operation can be carried in two steps.

Given two input points $f = f_0 + f_1 X$ and $g = g_0 + g_1 X$, one point-wise multiplication is computed as $h = f *_{PW} g\ mod(X^2 - K)$, where $mod(X^2 - K)$ refers to a modular operation using a constant value K (here the modulus q).

One point-wise multiplication:

$$h_0 + h_1 X = (f_0 + f_1 X) *_{PW} (g_0 + g_1 X) mod(X - K)$$

The output values $h_0$, $h_1$ are computes as:

$$h_0 = f_0 g_0 + f_1 g_1 X$$

$$h_1 = (f_0 + f_1)(g_0 + g_1) - (f_0 g_0 + f_1 g_1)$$

Therefore, it is possible to carry out the point-wise multiplication by splitting the entire computation in four calculation executions:

- a first calculation execution wherein the following quantities are calculated:

EP 4 726 531 A1

$$s_0 = f_0 + f_1$$

$$m_0 = f_0 g_0$$

- a second calculation execution wherein the following quantities are calculated:

$$s_1 = g_0 + g_1$$

$$m_1 = f_1 g_1$$

- a third calculation execution wherein the following quantities are calculated:

$$s_2 = m_0 + m_1$$

$$m_2 = s_0 s_1$$

$$m_3 = m_1 K$$

- a fourth calculation execution wherein the following quantities are calculated:

$$h_0 = m_0 + m_3$$

$$h_1 = m_2 - s_2$$

In the proposed implementation, it appears that the first calculation execution and the second calculation execution on one hand and the third calculation execution and the fourth calculation can be executed during the same step (same calculation configuration).

Therefore, using the 2-way Karatsuba technique, such operation can be carried out by two steps, each respectively corresponding to the configuration of figure 15 and the configuration of figure 16.

To carry out the first step (namely calculation $s_0$, $s_1$, $m_0$ et $m_1$), the calculation configuration is the calculation configuration of figure 15. In such calculation configuration:

- the first calculation module M1 is in the first calculation mode, resulting in a first operation $O_{M1}$ being a modular addition,
- the second calculation module M2 is in the disabled mode, resulting in a second operation $O_{M2}$ being identity,
- the third calculation module M3 is in the first calculation mode, resulting in a third operation $O_{M3}$ being an integer multiplication, and
- the fourth calculation module M4 is in the disabled mode, resulting in a fourth operation $O_{M4}$ being identity.

18

Considering the operating of each calculation module M1 to M4, this results in a specification combination of value for the configuration signals, which is expressed in the following table:

| Configuration signals | Value |
|---|---|
| op_mode | 0 |
| add_sub | 0 |
| pwm_in | 0 |
| intt_s | 0 |
| mul_sel1 | 1 |
| mul_sel2 | 0 |
| mul_sel3 | 1 |
| mul_sel4 | 0 |
| mul_sel5 | 0 |

Functionally, this leads to the calculation configuration illustrated on the right part of figure 15, which is indeed the configuration adapted to calculate the first step of the proposed implementation of point wise multiplication.

To carry out the second step (namely calculation of $h_0$ and $h_1$ based on $s_0$, $s_1$, $m_0$ et $m_1$), the calculation configuration is the calculation configuration of figure 16. In such calculation configuration:

- the first calculation module M1 is in the first calculation mode, resulting in a first operation $O_{M1}$ being a modular addition,
- the second calculation module M2 is in the disabled mode, resulting in a second operation $O_{M2}$ being identity,
- the third calculation module M3 is in the first calculation mode, resulting in a third operation $O_{M3}$ being an integer multiplication, and
- the fourth calculation module M4 is in the second calculation mode, resulting in a fourth operation $O_{M4}$ being a modular addition.

Considering the operating of each calculation module M1 to M4, this results in a specification combination of value for the configuration signals, which is expressed in the following table:

| Configuration signals | Value |
|---|---|
| op_mode | 0 |
| add_sub | 0 |
| pwm_in | 1 |
| intt_s | 0 |
| mul_sel1 | 1 |
| mul_sel2 | 0 |
| mul_sel3 | 0 |
| mul_sel4 | 0 |
| mul_sel5 | 0 |

Functionally, this leads to the calculation configuration illustrated on the right part of figure 16, which is indeed the configuration adapted to calculate the second step of the proposed implementation of point wise multiplication.

Through these examples of calculation configurations, it appears that the calculation accelerator 10 is adapted to carry out several operations in several cryptosystems, as summarized by the following table:

| Cryptosystem | Operation | Value of the configuration signals* |
|---|---|---|
| Crystals-KYBER | forward NTT | 010010011 |
| | inverse NTT | 010100100 |
| | point-wise multiplication | 000010100 and then 001010000 |
| HQC | FFT_LCH | 100011001 |
| | IFFT_LCH | 100001101 |
| | PWM | 100010100 |

*in this table, the value of the configuration signals are expressed based on the following ordering of the configuration signals: op_mode, add_sub, pwm_in, intt_s, mux_sel1, mux_sel2, mux_sel3, mux_sel4 and mux_sel5.*

Such calculation accelerator 10 therefore provides with the ability of carrying out operations of several cryptosystems on the same hardware.

This configurability is accompanied by a better performance and a reduction of the occupied space, as shown by experiments carried out by the Applicant.

For this, the Applicant has computed the gain in term of number of clock cycles, by using the HQC implementation from PQClean. Such HQC PQClean SW implementations can be found at the following address:

https://github.com/PQClean/PQClean/tree/master/crypto_kem

The Applicant performed a benchmark, using Zybo Z7 platform board, of the reference polynomial multiplication operation and further compared it with the scenario of using this invention.

| | HQC-128 (cycles) | HQC-192 (cycles) | HQC-256 (cycles) |
|---|---|---|---|
| **First calculation accelerator (prior art)** | 27.045 | 82.984 | 151.735 |
| **Calculation accelerator 10** | 1.697 | 3.426 | 3.426 |
| **Cycle saving** | -93% | -96% | -98% |

Concerning the reduction of area surface, the Applicant has compared the number of look-up tables (LUT) that would imply carrying out the previous calculation configurations in two distinct hardware implementations: a first hardware implementation with two different accelerators and a second hardware implementation with only the calculation accelerator 10.

In the first hardware implementation, one accelerator is dedicated to implementing operations for Crystals-KYBER and the other one is dedicated to implement HQC's operations and notably carryless polynomial schoolbook-based multiplication. The first accelerator needs 3056 LUT to proceed while the second accelerator takes 412 LUT to carry out its calculation. This leads to a total number of 3056+412= 3468 LUT for the first physical implementation.

According to the second hardware implementation, 3020 LUT are implied, which corresponds to a reduction of about to 17% in area surface.

As before for the performance, the same comparison can be made with PQClean and leads to a reduction of area, namely 1592 LUT versus 1500 LUT.

This calculation accelerator 10 is thus an efficient hardware architecture based on a polynomial multiplication sharing strategy between Crystals-KYBER (based on Euclidean networks, currently being standardized by NIST) and HQC (alternative candidate based on error correcting code).

The present calculation accelerator 10 is further easily adaptable to other calculation configurations.

An example is now described for the FHT operation in reference to figures 17 to 19.

FHT operation is Fast Hadamard Transform and is a time-consuming operation present in the decode step of the HQC cryptosystem.

This operation, like the ones seen previously, is based on the Fast Fourier transform and its structure follows a divide and conquer approach. It notably relies on an addition and a subtraction (non-modular one).

For this, two additional units 160 and 170 for the first calculation module M1 can be used. The first additional unit 160 is used to mask the three most significant bits of out_1 whereas the second additional unit 170 is used to select between two signals, namely the signal C1 and a signal fht_s.

Concerning the first additional unit 160, when fht_s = 0, the three most significand bits will be force to 0 value, whereas, when fht_s = 1, the three most significand bits will represent the original data from the adder 230 without modification.

The first calculation module M1 is therefore adapted to operate in an additional configuration mode by implementing a carry addition performed on 16-bits.

The same applies to the second calculation module M2 with the two additional units 260 and 270, which is adapted to operate in an additional configuration mode by implementing a carry subtraction performed on 16-bits.

The calculation accelerator 10 is thus very easily configurable to carry out operations implied in any cryptosystem and notably other cryptosystems not mentioned so far, such as Crystals-Dilithium, Falcon (other cryptographic systems based on lattices) or BIKE (other cryptographic system based on codes).

**Claims**

1. A calculation accelerator (10) adapted to carry out calculations according to a first cryptosystem and a second cryptosystem, the first cryptosystem being a lattice-based cryptosystem and the second cryptosystem being a code-based cryptosystem,

   the calculation accelerator (10) comprising a plurality of calculation modules, each calculation module applying an operation on input signals to obtain an output signal, the plurality of calculation modules comprising:

   - a first calculation module (M1) configured to apply a first operation ($O_{M1}$) on its input signals, the first calculation module (M1) being configurable between a first calculation mode in which the first operation ($O_{M1}$) is a modular addition and a second calculation mode in which the first operation ($O_{M1}$) is a carryless addition,
   - a second calculation module (M2) configured to apply a second operation ($O_{M2}$) on its input signals, the second calculation module (M2) being configurable between a disabled mode wherein the second operation ($O_{M2}$) is identity with relation to one of the input signals of the second calculation module (M2), a first calculation mode in which the second operation ($O_{M2}$) is a modular subtraction, a second calculation mode in which the second operation ($O_{M2}$) is a modular addition and a third calculation mode in which the second operation ($O_{M2}$) is a carryless addition,
   - a third calculation module (M3) configured to apply a third operation ($O_{M3}$) on its input signals, the third calculation module (M3) being configurable between a first calculation mode in which the third operation ($O_{M3}$) is an integer multiplication, a second calculation mode in which the third operation ($O_{M3}$) is a carryless multiplication, and
   - a fourth calculation module (M4) configured to apply a fourth operation ($O_{M4}$) on its input signals, the fourth calculation module (M4) being configurable between a disabled mode wherein the fourth operation ($O_{M4}$) is identity with relation to one of the input signals of the fourth calculation module (M4), a first calculation mode in which the fourth operation ($O_{M4}$) is a modular subtraction, a second calculation mode in which the fourth operation ($O_{M4}$) is a modular addition and a third calculation mode in which the fourth operation ($O_{M4}$) is a carryless addition.

2. The calculation accelerator according to claim 1, wherein the first cryptosystem is Crystals-KYBER and the second cryptosystem is HQC.

3. The calculation accelerator according to claim 1 or 2, wherein the plurality of calculation module consists of the first calculation module (M1), the second calculation module (M2), the third calculation module (M3) and the fourth calculation module (M4).

4. The calculation accelerator according to any one of claims 1 to 3, wherein each calculation module is an hardware circuitry.

5. The calculation accelerator according to any one of claims 1 to 4, wherein the calculation accelerator (10) comprises a first input (20) adapted to receive a first input signal (I1), a second input (22) adapted to receive a second input signal (I2), a third input (24) adapted to receive a third input signal (I3), a first output (26) adapted to output a first output signal (O1) and a second output (28) adapted to output a second output signal (100),

   the input signals of the first calculation module (M1) being the first input signal (I1) of the calculation accelerator (10), the second input signal (I2) of the calculation accelerator (10) and an output of the third calculation module (M3), the first calculation module (M1) being configured to output a first result signal (RS1), the first result signal (RS1) being the result of the application of the first operation ($O_{M1}$) on two of the input signals of the first calculation module (M1), the first output signal (O1) being the first result signal (RS1).

6. The calculation accelerator according to claim 5, wherein the first calculation module (M1) comprises an input selector arranged to select a signal between the second input signal (I2) of the calculation accelerator (10) and the output of the third calculation module (M3), the first operation ($O_{M1}$) being applied on the first input signal (I1) and the selected signal.

7. The calculation accelerator according to claim 5 or 6, wherein the input signals of the second calculation module (M2) are the first input signal (I1) of the calculation accelerator (10) and the second input signal (I2) of the calculation accelerator (10), the second calculation module (M2) being configured to output a second result signal (RS2), the second result signal (RS2) being the result of the application of the second operation ($O_{M2}$) on the input signals of the second calculation module (M2).

8. The calculation accelerator according to any one of claims 5 to 7, wherein the inputs signals of the third calculation module (M3) are an output of the second calculation module (M2) and the third input signal (I3) of the calculation accelerator (10), the third calculation module (M3) being configured to output a third result signal (RS3), the third result signal (RS3) being the result of the application of the third operation ($O_{M3}$) on the input signals of the third calculation module (M3).

9. The calculation accelerator according to any one of claims 5 to 8, wherein the input signals of the fourth calculation module (M4) are the first result signal (RS1), the second result signal (RS2), the third result signal (RS3) and the first input signal (I1) of the calculation accelerator (10), the fourth calculation module (M4) being configured to output a fourth result signal (RS4), the fourth result signal (RS4) being the result of the application of the fourth operation ($O_{M4}$) on two of the input signals of the fourth calculation module (M4), the second output signal of the calculation accelerator (10) being the fourth result signal (RS4).

10. The calculation accelerator according to claim 9, wherein the fourth calculation module (M4) comprises an input selector arranged to select a first selected signal among the first result signal (RS1) and the first input signal (I1) of the calculation accelerator (10) and a second selected signal among the second result signal (RS2) and the third result signal (RS3), the fourth operation ($O_{M4}$) being applied on the first selected signal and the second selected signal.

11. The calculation accelerator according to any one of claims 1 to 10, wherein the first calculation module (M1) is configurable between the first calculation mode, the second calculation mode and at least one additional calculation mode, the at least one additional calculation mode being chosen among a mode in which the first operation ($O_{M1}$) is a carry addition performed on 16 bits and a mode in which the first operation ($O_{M1}$) is a carry modular addition with modular division by 2 modulo a predetermined modulus.

12. The calculation accelerator according to any one of claims 1 to 11, wherein the first calculation module (M1) comprises a first calculation line adapted to calculate a carryless addition and a second calculation line adapted to calculate a carry addition, the first calculation line being distinct from the second calculation line.

13. The calculation accelerator according to any one of claims 1 to 12, wherein the second calculation module (M2) is configurable between the disabled mode, the first calculation mode, the second calculation mode and at least one additional calculation mode, the at least one additional calculation mode being chosen among a mode in which the second operation ($O_{M2}$) is a carry subtraction performed on 16 bits and a mode in which the second operation ($O_{M2}$) is a carry modular subtraction with modular division by 2 modulo a predetermined modulus.

14. The calculation accelerator according to any one of claims 1 to 13, wherein each of the second calculation module (M2) and the fourth calculation module (M4) comprises a first calculation line adapted to calculate a carryless subtraction and a second calculation line adapted to calculated a carry substraction, the first calculation line being distinct from the second calculation line.

15. The calculation accelerator according to any one of claims 1 to 14, wherein the calculation accelerator (10) comprises several configuration inputs (14), each configuration input being adapted to receive a respective configuration signal, each calculation module being adapted to receive at least one of the configuration signal, the calculation mode of each calculation module being controlled by the value of the at least one of the configuration signal.

FIG.1

FIG.2

EP 4 726 531 A1

FIG.3

FIG.4

EP 4 726 531 A1

**FIG.5**

FIG.6

EP 4 726 531 A1

FIG.7

EP 4 726 531 A1

FIG.8

EP 4 726 531 A1

FIG.9

FIG.10

FIG.11

EP 4 726 531 A1

FIG.12

FIG.13

EP 4 726 531 A1

FIG.14

EP 4 726 531 A1

FIG.15

FIG.16

FIG.17

FIG.18

FIG.19

| Europäisches Patentamt<br>European Patent Office<br>Office européen des brevets | **EUROPEAN SEARCH REPORT** | **Application Number**<br>EP 24 30 6683 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU YIHONG ET AL: "16.2 A 28nm 69.4kOPS 4.4[mu]J/Op Versatile Post-Quantum Crypto-Processor Across Multiple Mathematical Problems",<br>2024 IEEE INTERNATIONAL SOLID-STATE CIRCUITS CONFERENCE (ISSCC), IEEE,<br>vol. 67, 18 February 2024 (2024-02-18), pages 298-300, XP034561873,<br>DOI: 10.1109/ISSCC49657.2024.10454332<br>[retrieved on 2024-03-13]<br>* Title *<br>* figures 16.2.2, 16.2.4, 16.2.6 *<br>* paragraph [0002] *<br>* paragraph [0004] * | 1-15 | INV.<br>G06F7/72 |
| X | ZHU YIHONG ET AL: "RePQC: A 3.4-uJ/Op 48-kOPS Post-Quantum Crypto-Processor for Multiple-Mathematical Problems",<br>IEEE JOURNAL OF SOLID-STATE CIRCUITS,<br>vol. 58, no. 1,<br>1 January 2023 (2023-01-01), pages 124-140, XP093260981,<br>USA<br>ISSN: 0018-9200, DOI: 10.1109/JSSC.2022.3216758<br>Retrieved from the Internet:<br>URL:https://ieeexplore.ieee.org/stampPDF/getPDF.jsp?tp=&arnumber=9977406&ref=aHR0cHM6Ly9pZWVleHBsb3JlLmllZWUub3JnL2Fic3RyYWN0L2RvY3VtZW50Lzk5Nzc0MDY=><br>* abstract *<br>* figures 1-3 *<br>* Sections I-IV *<br>* Section VI * | 1,11,13 | TECHNICAL FIELDS SEARCHED (IPC)<br><br>G06F<br>H04L |

-/--

The present search report has been drawn up for all claims

| Place of search | Date of completion of the search | Examiner |
|---|---|---|
| Munich | 21 March 2025 | Winkelbauer, Andreas |

EPO FORM 1503 03.82 (P04C01)

page 1 of 2

Europäisches Patentamt

European Patent Office

Office européen des brevets

**EUROPEAN SEARCH REPORT**

Application Number

EP 24 30 6683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU YIHONG ET AL: "A 28nm 48KOPS 3.4[mu]J/Op Agile Crypto-Processor for Post-Quantum Cryptography on Multi-Mathematical Problems", 2022 IEEE INTERNATIONAL SOLID- STATE CIRCUITS CONFERENCE (ISSCC), IEEE, vol. 65, 20 February 2022 (2022-02-20), pages 514-516, XP034103131, DOI: 10.1109/ISSCC42614.2022.9731783 [retrieved on 2022-03-08] * Title * * figures 34.1.2, 34.1.6 * * paragraph [0001] - paragraph [0003] * ----- | 1 | |
| A | Fritzmann Tim: "Towards Secure Coprocessors and Instruction Set Extensions for Acceleration of Post-Quantum Cryptography", mediaTUM, 22 December 2022 (2022-12-22), pages 1-196, XP093134622, München Retrieved from the Internet: URL:https://mediatum.ub.tum.de/1650057 [retrieved on 2024-02-26] * Chapters 1-4 * ----- | 1-15 | TECHNICAL FIELDS SEARCHED (IPC) |

The present search report has been drawn up for all claims

| Place of search | Date of completion of the search | Examiner |
|---|---|---|
| Munich | 21 March 2025 | Winkelbauer, Andreas |